# EUROPÄISCHE PATENTSCHRIFT

(11) **EP 0 911 250 B1**
(45) Veröffentlichungstag und Bekanntmachung des Hinweises auf die Patenterteilung: **25.02.2004**
(21) Anmeldenummer: 98117024.4
(22) Anmeldetag: 09.09.1998
(51) Int. Cl.: B62J 17/00

(54) **Windschutz für vollverschalte Motorräder**
Windprotection for entirely covered motorcycles
Protection contre le vent pour motocyclettes entièrement revêtues

(30) Priorität: 21.10.1997 DE 19746440
(43) Veröffentlichungstag der Anmeldung: 28.04.1999
(73) Patentinhaber: Bayerische Motoren Werke Aktiengesellschaft, 80788 München (DE)
(72) Erfinder: Rehschuh, Rainer, 84072 Au (DE)

(56) Entgegenhaltungen:
- DE-A1- 3 420 352
- US-A- 4 130 315
- US-A- 4 911 494

## Beschreibung

Die Erfindung betrifft einen Windschutz für vollverschalte Motorräder mit stufenlosem Übergang von der Frontverkleidung zum Mittelteil der Verkleidung und mit zwei von der Frontverkleidung seitwärts abstehenden Ausbauchungen für die Rückspiegel und/oder Blinker.

Bei solchen vollverschalten Motorrädem hat der stufenlose Übergang von der Frontverkleidung zum Mittelteil der Verkleidung die negative Begleiterscheinung, dass der Fahrer teilweise dem Fahrtwind ausgesetzt ist, und zwar insbesondere im Brustbereich. Da hinter dem Windschild ein Unterdruck entsteht, wird diese Wirkung noch verstärkt. Als Gegenmaßnahme ist es zwar bekannt, die von der Frontverkleidung seitwärts abstehenden Ausbauchungen nach unten in den Bereich der Unterschenkel des Fahrers zu verlängern. Eine derartige Verkleidung, die auch Tourenverkleidung genannt wird, bietet zwar bei geschickter Gestaltung einen ausreichenden Windschutz und einen Schutz bei schlechter Witterung wie Regen oder Schneefall und allgemein bei niedrigen Außentemperaturen. Andererseits fehlt dem Fahrer aber bei hohen Außentemperaturen der kühlende Fahrtwind, und es wird hinter der Verkleidung unangenehm heiß. Davon abgesehen wird eine solche Tourenverkleidung von vielen Motorradfahrern als unschön empfunden.

Aus der US-A-4 130 315 ist ein Windschutz für ein Motorrad bekannt, bei dem im unteren vorderen Bereich der Verkleidung an jeder Seite ein Spoiler vorgesehen ist, der im wesentlichen um eine vertikale Achse verschenkbar ist.

Der Erfindung liegt die Aufgabe zugrunde, einen Windschutz für vollverschalte Motorräder zu schaffen, mit dem es möglich ist, die widersprüchlichen Forderungen hinsichtlich Schutz des Fahrers bei niedrigen Außentemperaturen und Kühlung des Fahrers bei hohen Außentemperaturen in gefahrloser Weise zu erfüllen.

Erfindungsgemäß wird diese Aufgabe mit einem Windschutz gelöst, der gekennzeichnet ist durch einen Spoiler, der unter jeder Ausbauchung schwenkbar gelagert ist.

Um auch während der Fahrt eine gefahrlose Verstellung des Spoilers zu ermöglichen, ist gemäß der Erfindung vorgesehen, daß dem Spoiler ein elektrischer Stellmotor zugeordnet ist.

Wenn der Spoiler zu der vom Fahrtwind verursachten Luftströmung eine näherungsweise rechtwinklige Stellung einnimmt, dann wird die Luftströmung zur Seite hin umgelenkt, so daß der Brust- und Bauchbereich des Fahrers vom Fahrtwind weitgehend geschützt ist. Wenn der Spoiler jedoch in eine zur Luftströmung parallele Stellung verschwenkt wird, dann kann der Fahrtwind den Bauch- und Brustbereich des Fahrers kühlen. Versuche haben ergeben, daß durch die Anbringung des Spoilers unter den seitlich abstehenden Ausbauchungen der Frontverkleidung eine überaus wirksame Ablenkung des Fahrtwindes erreicht werden kann. Der Spoiler kann daher mit verhältnismäßig kleinen Abmessungen ausgebildet sein, so daß das Aussehen des Motorrades auch in der wirksamen Stellung des Spoilers nicht beeinträchtigt wird.

Der Spoiler ist vorzugsweise um eine der Frontverkleidung benachbarte näherungsweise vertikale Achse schwenkbar gelagert. Wenn keine Ablenkung des Fahrtwindes gewünscht wird, dann wird der Spoiler an die Verkleidung flach angeklappt. In dieser Stellung fällt der Spoiler kaum auf, so daß das durch den schmalen Mittelteil der Verkleidung bewirkte sportliche Aussehen des Motorrades erhalten bleibt.

Die von dem Spoiler verursachte Ablenkung des Luftstroms ist besonders stark, wenn er in der wirksamen Stellung nach vome geneigt ist. Der Fahrtwind wird dann schräg nach unten an den Unterschenkeln des Fahrers vorbei abgelenkt.

Ein bevorzugtes Ausführungsbeispiel der Erfindung ist in der Zeichnung dargestellt und wird nachfolgend näher erläutert. Es zeigt:
Fig. 1 eine schematische Schrägansicht des vorderen Bereichs eines vollverschalten Motorrades, und
Fig. 2 eine schematische Draufsicht auf das Motorrad nach Fig. 1.

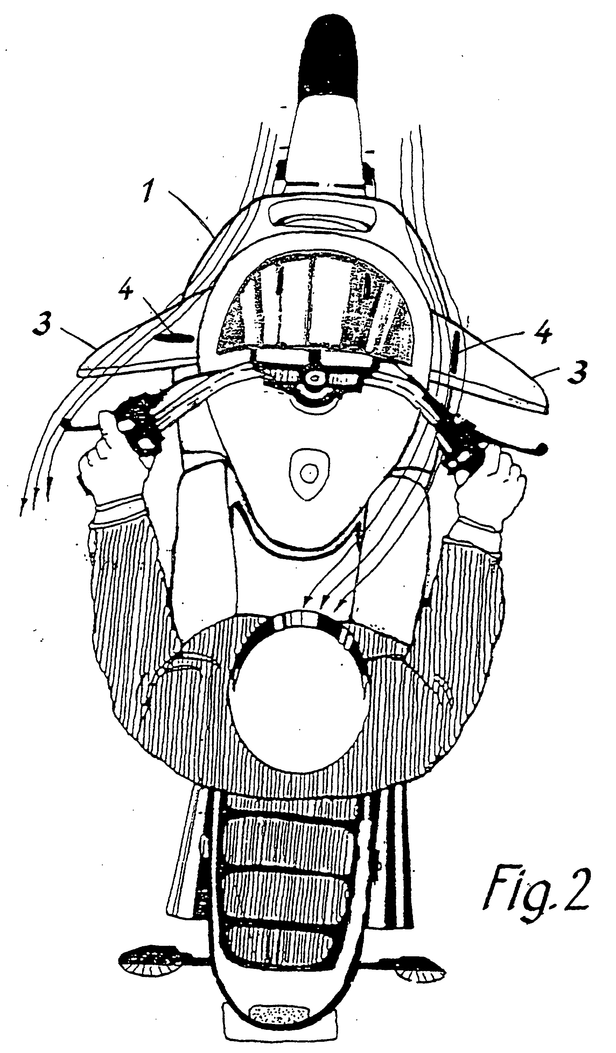

Das in der Zeichnung dargestellte Motorrad ist vollkommen verschalt. Die Frontverkleidung 1 umgibt den Motorblock, den Lenker und den Scheinwerfer, und sie geht oben in einen Windschild 2 über. Die Frontverkleidung 1 ist mit zwei seitwärts abstehenden Ausbauchungen 3 für die Rückspiegel und/oder Blinker versehen. Wie aus der Draufsicht nach Fig. 2 hervorgeht, geht die Frontverkleidung stufenlos in den Mittelteil der Verkleidung über bzw. die Außenseiten der Beine des Fahrers sind mit der Frontverkleidung 1 bündig. Bei einer solchen Verkleidung ist der Fahrer insbesondere im Bauch- und Brustbereich dem Fahrtwind ausgesetzt, weil hinter der Frontverkleidung 1 ein Unterdruck entsteht, so daß die Luftströmung nach innen umgelenkt wird, wie in der rechten Hälfte von Fig. 2 mit Pfeilen angedeutet ist.

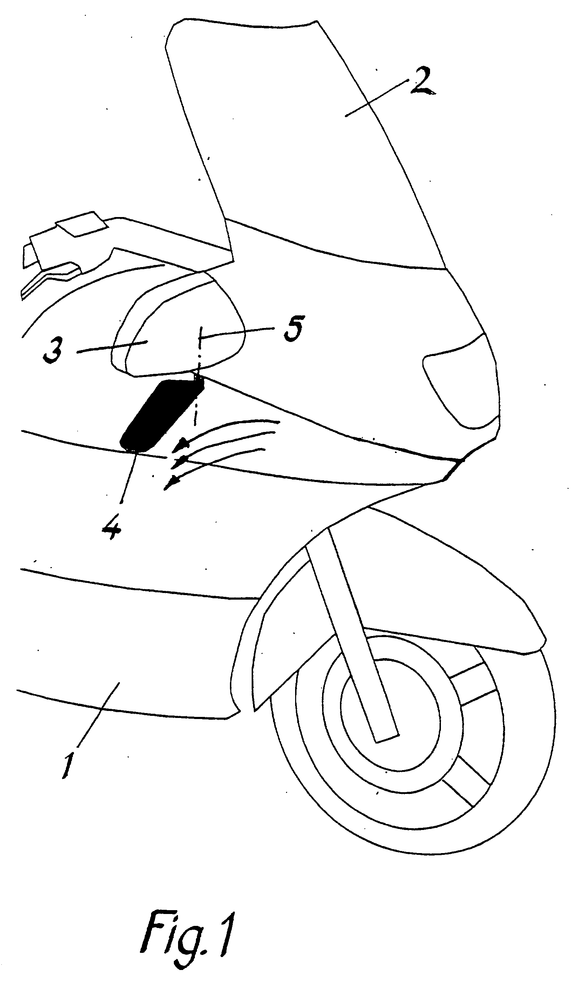

Unter jeder Ausbauchung 3 der Frontverkleidung 1 ist ein Spoiler 4 schwenkbar gelagert. Genauer gesagt jeder Spoiler 4 ist mit der darüber befindlichen Ausbauchung 3 um eine vertikale Achse 5 schwenkbar verbunden, die von der Frontverkleidung 1 einen geringen Abstand aufweist. In Fig. 1 und in der linken Hälfte von Fig. 2 ist der Spoiler 4 in der wirksamen Stellung gezeigt. In dieser wirksamen Stellung ist der Spoiler 5 rechtwinklig zu der vom Fahrtwind verursachten Luftströmung angeordnet und leicht nach vome geneigt. Wie durch Pfeile angedeutet ist, wird die Luftströmung in der wirksamen Stellung des Spoilers 4 nach außen und nach unten umgelenkt, so daß der Fahrer im Bauch- und Brustbereich gegen den Fahrtwind geschützt ist.

In der rechten Hälfte von Fig. 2 ist der Spoiler 4 in der unwirksamen Stellung gezeigt, in der er flach an die Frontverkleidung .1 angeklappt ist. In dieser unwirksamen Stellung des Spoilers 4 wird die Luftströmung nicht umgelenkt und kann in das Unterdruckgebiet hinter der Frontverkleidung 1 strömen, um den Fahrer im Brustbereich zu kühlen.

Um auch während der Fahrt eine gefahrlose Verdrehung des Spoilers 4 um seine Achse 5 zu ermöglichen, kann in jeder Ausbauchung 3 ein (nicht gezeigter) elektrischer Verstellmotor angeordnet sein. Bei dieser Ausführungsform kann der Fahrer den Spoiler während der Fahrt zwischen der wirksamen und der unwirksamen Stellung verdrehen, ohne den Lenker loszulassen.

## Patentansprüche

1. Windschutz für vollverschalte Motorräder mit stufenlosem Übergang von der Frontverkleidung (1) zum Mittelteil der Verkleidung, mit zwei von der Frontverkleidung (1) seitwärts abstehenden Ausbauchungen (3) für die Rückspiegel und/oder Blinker und mit Spoiler (4), die unter jeder Ausbauchung (3) schwenkbar gelagert sind, **dadurch gekennzeichnet, dass** den Spoilern (4) ein elektrischer Stellmotor zugeordnet ist.

## Claims

1. A wind guard for fully encased motorcycles, with a stepless transition from the front covering (1) to the middle part of the covering, two protuberances (3) extending sideways from the front covering (1) for the rear mirror and/or indicator light, and spoilers (4) pivotably mounted under each protuberance (3), **characterised in that** the spoilers (4) are associated with an electric servomotor.

## Revendications

1. Coupe-vent pour des motocyclettes intégralement recouvertes comportant une transition continue du revêtement avant (1) vers la partie centrale du revêtement, comportant deux cavités (3), destinées au rétroviseur et/ou au clignotant, qui s'écartent latéralement du revêtement avant (1) et comportant des déflecteurs (4) qui sont montés de façon à pouvoir pivoter sous chaque cavité (3),
**caractérisé en ce qu'**
un moteur de commande électrique est associé aux déflecteurs (4).
